# FASCICULE DE BREVET EUROPEEN

(11) **EP 0 678 734 B1**
(45) Date de publication et mention de la délivrance du brevet: **26.08.1998**
(21) Numéro de dépôt: 95105339.6
(22) Date de dépôt: 08.04.1995
(51) Int. Cl.: G01D 7/04, G01P 1/08

(54) **Tableau de bord compact**
Kompaktes Armaturenbrett
Compact instrument panel

(30) Priorité: 19.04.1994 CH 1181/94; 09.06.1994 FR 9407069
(43) Date de publication de la demande: 25.10.1995
(73) Titulaire: SMH Management Services AG, CH-2501 Biel (CH)
(72) Inventeur: Frehner, Marc, CH-3250 Lyss (CH); Meyrat, Clément, CH-2525 Le Landeron (CH); Donzé, Daniel, CH-2502 Bienne (CH)
(74) Mandataire: Thérond, Gérard Raymond

(56) Documents cités:
- FR-A- 757 811
- GB-A- 1 540 562
- US-A- 4 954 807
- PATENT ABSTRACTS OF JAPAN vol. 17 no. 539 (P-1621) ,28 Septembre 1993 & JP-A-05 150054 (SEIKO EPSON CORP)
- PATENT ABSTRACTS OF JAPAN vol. 4 no. 131 (P-027) ,13 Septembre 1980 & JP-A-55 082085 (CITIZEN WATCH CO LTD) 20 Juin 1980,

## Description

La présente invention a pour objet un dispositif compact d'affichage analogique pour un instrument de mesure, ou de contrôle, dans lequel plusieurs aiguilles sont superposées sur un même cadran, de façon à permettre la lecture simultanée d'une mesure principale et d'autres mesures différentes ou complémentaires.

L'invention concerne plus particulièrement un tableau de bord pour un engin de locomotion qui permette, malgré la dimension réduite de sa zone d'affichage, de fournir en permanence à un conducteur les informations nécessaires sur la bonne marche de son véhicule.

De façon usuelle l'affichage des tableaux de bord comporte plusieurs cadrans d'affichage, conçus comme autant d'unités fonctionnelles individuelles, chaque unité étant pourvue de sa propre zone d'affichage, de son propre moteur et de sa propre plaquette supportant le circuit imprimé de commande du moteur pour le déplacement d'une aiguille en regard d'une échelle, les différentes unités étant ensuite juxtaposées, assemblées et connectées dans un même boîtier. Le brevet US 4 954 807 constitue un exemple d'un tel tableau de bord traditionnel, dans lequel quatre affichages portés par des disques sont juxtaposés. On observera qu'un tel dispositif présente l'inconvénient d'être relativement encombrant, en ayant notamment une surface d'affichage importante, même si certains angles morts entre les disques d'affichage peuvent être occupés par des voyants ou par des jauges.

Une telle construction est inspirée, d'une part des premiers tableaux de bord, tel que celui d'écrit dans le brevet FR 757 811 de 1933, dans lequel un entraînement mécanique permettait de faire évoluer une aiguille principale au dessus de cadrans secondaires, d'autre part de l'avènement des moteurs pas à pas indépendants tels que ceux utilisés dans l'industrie horlogère, par exemple dans une chronographe tel que celui décrit dans le brevet JP 5 150 054.

On observera aussi qu'un conducteur désireux de contrôler, par exemple, sa vitesse d'un seul coup d'oeil pourra hésiter entre deux disques d'affichage d'égales dimensions. De tels dispositifs comportent généralement aussi des moyens d'éclairage par lampes ou par diodes, situées à l'avant du support de cadran pour les voyants et à l'arrière du support de cadran pour l'éclairage du cadran lui-même, ce qui contribue encore à accroître l'encombrement global.

Pour réduire la surface occupée par de tels tableaux de bord, divers dispositifs proposent d'utiliser un seul organe d'affichage, telle qu'une aiguille, qui se déplace devant des échelles différentes, ou devant des échelles dont la valeur d'interprétation peut être modifiée au moyen d'un bouton sélecteur. De tels dispositifs correspondent, par exemple, à celui qui est décrit dans le brevet US 4 174 500, dans lequel un cadran unique comporte plusieurs échelles, dont une seule est illuminée lors de la sélection de la mesure à effectuer. Un dispositif voisin est décrit dans le brevet EP 0 330 942, dans lequel l'échelle de repérage de l'aiguille est constituée par une cellule à cristaux liquides permettant de faire varier les indications portées par ladite échelle, au moyen d'un bouton de sélection de la mesure qu'on souhaite observer. De tels dispositifs offrent l'avantage d'avoir un encombrement plus réduit, mais présentent encore l'inconvénient, soit d'exiger de la part du conducteur la manipulation d'un bouton, soit de constituer une source de confusion pour un conducteur moyennement attentif à la signification des différentes échelles.

La présente invention a pour but de remédier à ces inconvénients en fournissant un tableau de bord compact qui permette néanmoins à un conducteur d'être informé simultanément d'une mesure principale, telle que la vitesse du véhicule, et de mesures complémentaires telles que le nombre de tours par minute du moteur, le niveau de carburant, l'état de charge de la batterie, l'heure, etc.

A cet effet, le tableau de bord selon l'invention comporte un cadran principal, pourvu en son centre d'une première aiguille mobile en regard d'une échelle située sur tout ou partie de la périphérie, ledit cadran principal constituant également le support d'autres cadrans plus petits, pourvus d'aiguilles destinés à évoluer dans l'espace compris entre la première aiguille et le cadran principal. L'utilisateur sera ainsi informé, sans équivoque et sans faire un effort particulier, d'une indication principale par la première aiguille et, par une observation un peu plus attentive, des informations données par la position des autres aiguilles en regard des échelles portées par les autres cadrans.

Le tableau de bord selon l'invention peut également comporter, de façon connue en soit des voyants lumineux, par exemple pour les clignoteurs droit et gauche, le frein à main, l'usure des freins, les feux de route ou les feux de croisement, ainsi que les cellules d'affichage à cristaux liquides, par exemple pour un compteur kilométrique ou pour un compteur kilométrique journalier. Afin de réduire encore l'encombrement en épaisseur, l'éclairage du tableau de bord selon l'invention est avantageusement effectué au moyen d'une feuille électroluminescente, ayant sensiblement la même surface que le cadran, à l'exception des zones d'affleurement des cellules d'affichage par cristaux liquides, au niveau desquelles la feuille électroluminescente est repliée à l'arrière de la cellule. L'éclairage des voyants peut de la même façon, si on le souhaite, être effectué au moyen de feuilles électroluminescentes, en réduisant ainsi l'espace compris entre le cadran et une vitre de fermeture, au minimum nécessaire pour la libre rotation des aiguilles superposées.

Une réduction en épaisseur est encore obtenue en positionnant et en fixant les moteurs d'entraînement des aiguilles directement entre une platine supportant le cadran et une plaquette servant également à supporter les circuits integrés de gestion de l'entraînement des moteurs.

L'invention sera mieux comprise en référence à un exemple de réalisation représenté par les dessins annexés dans lesquels :
- la figure 1 est une vue de face d'un tableau de bord selon l'invention.
- la figure 2 est une vue en perspective schématique éclatée du dispositif de la figure 1, sans la représentation des éléments d'assemblage mécanique, ni celle des connexions électriques.

Les figures représentent un tableau de bord donnant une indication principale de vitesse, des indications complémentaires relatives au nombre de tours/minute du moteur, au niveau d'essence et à l'heure, ces indications étant complétées par deux cellules à cristaux liquides, pour indiquer respectivement le kilométrage total, et le kilométrage journalier, et par des voyants.

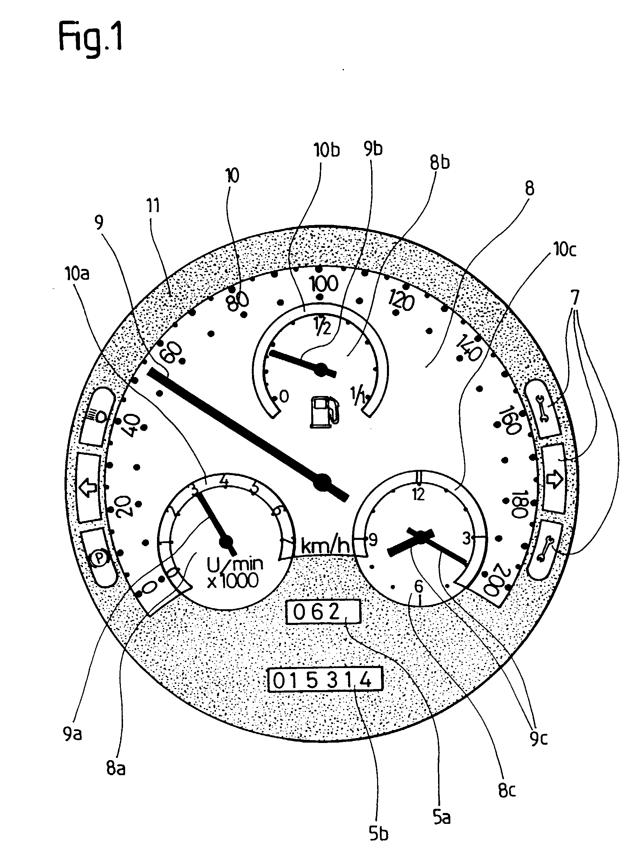

En se référant plus particulièrement à la figure 1, on voit que l'indication principale est fournie par une grande aiguille 9, mobile au dessus d'un cadran principal circulaire 8, réalisé en un matériau transparent, et comportant près de sa périphérie une échelle 10 graduée de 0 à 200 km/h. Sur le cadran principal 8 sont imprimés trois autres cadrans secondaires circulaires 8a, 8b, et 8c de plus petites dimensions, dont les échelles graduées 10a, 10b, et 10c donnent respectivement des indications relatives au nombre de tours/minute du moteur, au niveau du carburant et à l'heure, au moyen d'aiguilles 9a, 9b, et 9c, lesdites aiguilles étant situées dans un espace compris entre le plan dans lequel se déplace la grande aiguille 9 et le plan du cadran principal 8. La face avant du tableau de bord comporte également plusieurs voyants 7 répartis à la périphérie et deux cellules d'affichage à cristaux liquides 5a et 5b, dans une zone laissée libre par les petits cadrans 8a, 8b et 8c.

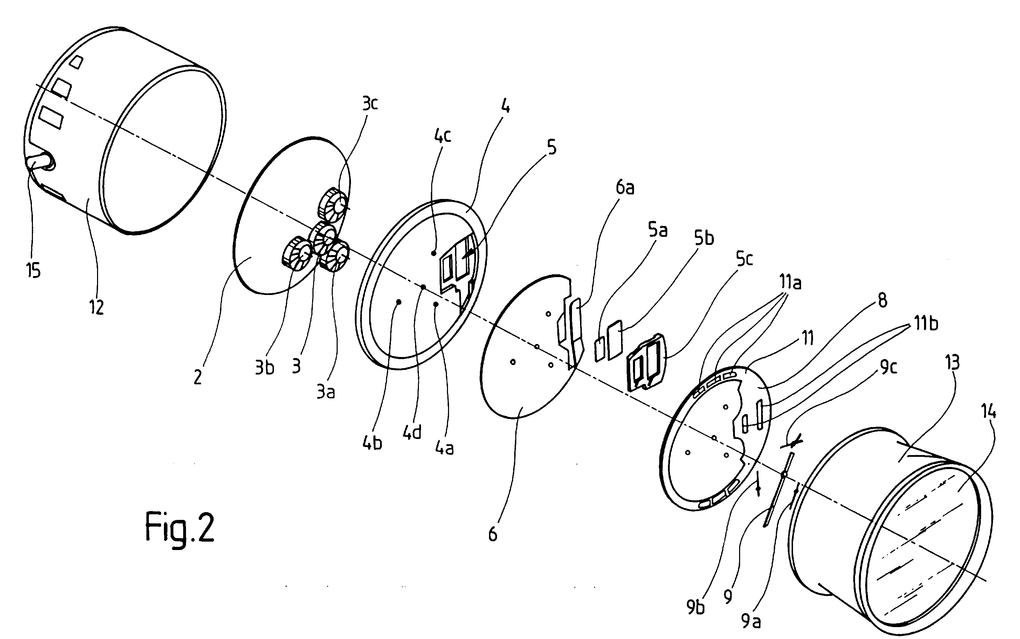

Comme on le voit plus clairement sur la vue éclatée schématique de la figure 2, les aiguilles de chacun des cadrans sont entraînées par de petits moteurs 3, 3a, 3b, 3c directement positionnés et maintenus entre une plaquette 2 et une platine 4 au moyen de trous traversants 4a, 4b, 4c et 4d et d'entretoises (non représentées). La face arrière de la plaquette 2, opposée à celle supportant les moteurs, comporte un circuit imprimé pour la gestion des différents affichages.

La platine 4 comporte également une ouverture 5 destinée, d'une part à recevoir les deux cellules d'affichage à cristaux liquides 5a, 5b maintenue en place par un cache 5c, et d'autre part à permettre le passage d'une languette 6a d'une feuille électroluminescente 6, ladite languette étant destinée à l'éclairage arrière desdites cellules.

La feuille électroluminescente 6 est disposée entre la platine 4 et le cadran 8. Le cadran 8, réalisé en un matériau transparent, comporte toutes les indications plus complètement représentées à la figure 1. Il comporte notamment un pourtour opaque 11 dans lequel sont ménagées des fenêtres 11a pour les voyants 7 et des fenêtres 11b pour les cellules 5a et 5b. De façon équivalente, les indications du cadran 8 pourraient être portés par la feuille électroluminescente 6, le cadran 8 étant alors réduit au pourtour sombre 11 comportant les fenêtres 11a et 11b.

Les voyants 7 peuvent être éclairés soit de façon usuelle au moyen d'ampoules ou de diodes disposées dans des logements ménagés à cet effet entre le cadran 8 et la platine 4. Ils peuvent également, en tout ou en parties, être éclairés par des éléments discrets de la feuille électroluminescente 6, lesdits éléments étant alors individuellement reliés à leurs propres circuits de commande. Ces éléments discrets peuvent bien entendu être réalisés en des matériaux électroluminescents ayant des longueurs d'onde d'émission dans le visible différentes de celles de la feuille occupant la plus grande partie du cadran 8. La feuille électroluminescente 6 et le cadran 8 comportent également des perçages alignés avec les trous traversent 4a, 4b, 4c et 4d pour les passages des axes des aiguilles 9a, 9b, 9c, et 9.

Les différents éléments qui viennent d'être décrits sont assemblés mécaniquement et électriquement, par les moyens habituels (non représentés), puis maintenus dans un boîtier 12 sur lequel vient se positionner une bague 13 fermée par une glace 14.

Le boîtier 12 comporte en outre un bouton de réglage 15 permettant, par exemple, de modifier les indications portées par le cadran, telle que l'heure de l'horloge de bord 8c, ou l'indication du compteur journalier 5a pour le remettre à zéro.

Le dispositif qui vient d'être décrit en prenant l'exemple d'un tableau de bord peut être utilisé en tout genre d'industrie. Dans la salle du contrôle d'une unité de production de produits chimiques, il permettra, par exemple, de surveiller en même temps le paramètre principal d'une réaction, telle que la température et des paramètres secondaires tels que la pression et les débits des réactifs.

De même le dispositif selon l'invention n'est pas limité à la forme cylindrique qui vient d'être décrite. Sans sortir du cadre de l'invention et restant dans le cadre du libellé des revendications, le boîtier pourrait avoir une forme générale ovale, carrée ou rectangulaire, dès lors qu'une aiguille donne une indication principale en étant totalement ou partiellement superposée aux aiguilles d'autres cadrans donnant des indications complémentaires, lesdites aiguilles étant entraînées par de petits moteurs positionnés et maintenus entre le support de cadran et une plaquette supportant également le circuit imprimé de gestion de l'ensemble des informations affichées.

## Revendications

1. Dispositif compact d'affichage analogique pour un instrument de mesure ou de contrôle comportant plusieurs cadrans (8, 8a, 8b, 8c) supportés par une platine (4), chaque cadran étant pourvu d'une échelle (10, 10a, 10b, 10c) permettant la lecture de mesures de natures différentes ou complémentaires au moyen d'aiguilles (9, 9a, 9b, 9c) individuellement entraînées par des moyens d'avance séparés (3, 3a, 3b, 3c), le cadran principal (8) donnant une mesure principale en regard d'une première échelle (10) au moyen d'une première aiguille (9), ladite première aiguille (9) se déplaçant au-dessus des cadrans secondaires (8a, 8b, 8c), situés à l'intérieur du périmètre du cadran principal (8) et donnant des mesures de natures différentes ou complémentaires en regard d'échelles secondaires (10a, 10b, 10c) au moyen d'autres aiguilles (9a, 9b, 9c), caractérisé en ce que les moyens d'avance sont des moteurs, les moteurs sont gérés par des circuits intégrés supportés par une unique plaquette, et les moteurs (3, 3a, 3b, 3c) sont positionnés et maintenus entre la plaquette (2) supportant les circuits intégrés et la platine (4) supportant les cadrans (8, 8a, 8b, 8c).

2. Dispositif compact d'affichage selon la revendication 1, caractérisé en ce qu'une feuille électroluminescente (6) est interposée entre la platine (4) et le premier cadran (8) pour éclairer tous les cadrans (8, 8a, 8b, 8c) du dispositif.

3. Dispositif d'affichage selon la revendication 1, caractérisé en ce qu'il comporte en outre des voyants (7) et des cellules d'affichage à cristaux liquides (5a, 5b).

4. Tableau de bord pour un engin de locomotion constitué par un dispositif selon la revendication 1 dans lequel le cadran principal (8) est circulaire et indique la vitesse de l'engin de locomotion.

## Patentansprüche

1. Kompakte Vorrichtung zur Analoganzeige für ein Meß- oder Steuerinstrument, umfaßend mehrere Skalenscheiben (8, 8a, 8b, 8c), die von einer Platine (4) getragen werden, wobei jede Skalenscheibe mit einer Maßeinteilung (10, 10a, 10b, 10c) versehen ist, die das Ablesen von Meßwerten unterschiedlicher Art oder komplementären Meßwerten mit Hilfe von Zeigern (9, 9a, 9b, 9c) ermöglichen, die individuell durch getrennte Bewegungsmittel (3, 3a, 3b, 3c) angetrieben sind, wobei die Hauptskalenscheibe (8) einen Hauptmeßwert in bezug auf eine erste Maßeinteilung (10) mittels eines ersten Zeigers (9) liefert, wobei sich der erste Zeiger (9) über den sekundären Skalenteilen (8a, 8b, 8c) bewegt und die unterschiedliche oder komplementäre Meßwerte in bezug auf zweite Maßeinteilgungen (10a, 10b, 10c) mit Hilfe weiterer Zeiger (9a, 9b, 9c) liefern, dadurch gekennzeichnet, daß die Mittel zum Bewegen Motoren sind, von integrierten Schaltkreisen gesteuert sind, die von einer einzigen Platte getragen werden und die Motoren (3, 3a, 3b, 3c) zwischen der Platte (2), die die integrierten Schaltkreise zeigt, und der Platine (4), die die Skalenscheiben (8, 8a, 8b, 8c) trägt, angeordnet und gehalten sind.

2. Kompakte Vorrichtung zur Anzeige gemäß Anspruch 1, dadurch gekennzeichnet, daß eine elektrolumineszierende Scheibe (6) zwischen der Platine (4) und der ersten Skalenscheibe (8) zum Erleuchten aller Skalenscheiben (8, 8a, 8b, 8c) der Vorrichtung angeordnet ist.

3. Vorrichtung zum Anzeigen gemäß Anspruch 1, dadurch gekennzeichnet, daß sie zudem Anzeigen (7) und Flüssigkristallanzeigezellen (5a, 5b) aufweist.

4. Armaturenbrett für eine Fortbewegungsmaschine, gebildet durch eine Vorrichtung nach Anspruch 1, bei der die Hauptskalenscheibe (8) kreisförmig ist und die Geschwindigkeit der Fortbewegungsmaschine anzeigt.

## Claims

1. Compact analog display device for a measurement or control instrument having a plurality of dials (8, 8a, 8b, 8c) supported by a plate (4), each dial being provided with a scale (10, 10a, 10b, 10c) permitting the reading of different or complementary types of measurements by means of hands (9, 9a, 9b, 9c) individually driven by separated driving means (3, 3a, 3b, 3c), the main dial (8) providing a main reading in relation to a first scale (10) by means of a first hand (9), said first hand (9) moving above secondary dials (8a, 8b, 8c) located inside the perimeter of the main dial (8) and giving readings of a different or complementary type in relation to secondary scales (10a, 10b, 10c) by means of different hands (9a, 9b, 9c), characterized in that the driving means are motors, the motors are controlled by integrated circuits supported by a single plate, and the motors (3, 3a, 3b, 3c) are positioned and retained between the plate (2) supporting the integrated circuits and the plate (4) supporting the dials (8, 8a, 8b, 8c).

2. Compact display device according to claim 1, characterized in that an electroluminescent sheet (6) is interposed between the plate (4) and the first dial (8) to illuminate all the dials (8, 8a, 8b, 8c) of the device.

3. Display device according to claim 1, characterized in that it also has indicators (7) and liquid crystal display cells (5a, 5b).

4. Instrument panel for a moving vehicle composed of a device according to claim 1 in which the main dial (8) is circular and indicates the speed of the moving vehicle.
